# EUROPEAN PATENT APPLICATION

(11) **EP 4 825 464 A1**
(43) Date of publication of application: **21.10.2026**
(21) Application number: 25773748.6
(22) Date of filing: 05.03.2025
(51) Int. Cl.: A63H 29/22, A63H 3/04, A63H 5/00, G06K 7/04, G06K 19/06

(54) **TOY**

(30) Priority: 21.03.2024 JP 2024044390
(71) Applicant: Bandai Co., Ltd., Tokyo 111-8081 (JP)
(72) Inventor: KIMURA, Satoshi, Tokyo 111-8081 (JP); SAKAI, Kensuke, Tokyo 111-8081 (JP); OTA, Nanami, Tokyo 111-8081 (JP); OKAZAKI, Daisuke, Tokyo 111-8081 (JP); YAMANAKA, Shinsuke, Tokyo 111-8081 (JP)
(74) Representative: Studio Torta S.p.A.
(86) International application number: PCT/JP2025/007967
(87) International publication number: WO 2025/197557

(57) **Abstract**

The intention relates to a toy (1) comprising a first unit (10) that holds identification information, wherein the first unit (10) is provided with a plurality of protrusions constituting the identification information and a movable protrusion (15) that does not constitute the identification information, and an operation portion (30) of a second unit (20) is operated by detecting, by the second unit (20) detachably attachable to the first unit (10), the plurality of protrusions constituting the identification information or the movable protrusion (15). Since the second unit (20) attachable to the first unit (10) having protrusions for identification information and the movable protrusion (15) that does not constitute the identification information is configured to be capable of detecting the protrusions for identification information and the movable protrusion (15), it is easy to realize a plurality of effects that operate by associating the first unit (10) and the second unit (20).

## Description

### TECHNICAL FIELD

The present invention relates to a toy.

### BACKGROUND ART

Conventionally, Patent Document 1 discloses one to be used as a toy. In Patent Document 1, an information processing system includes an information holding medium that holds identification information, and an information reading device that reads the identification information and operates in accordance with the read identification information, in which the information holding medium includes a first information holding portion having at least one element constituting the identification information, and a second information holding portion having at least one element constituting the identification information and movable between a first position and a second position, in a state in which the second information holding portion is disposed at the first position, first identification information is constituted by the element of the first information holding portion, and in a state in which the second information holding portion is disposed at the second position, second identification information is constituted by the element of the first information holding portion and the element of the second information holding portion. Such a configuration is disclosed.

### RELATED ART DOCUMENTS

### PATENT DOCUMENTS

Patent Document 1: Japanese Patent No. 6605011.

In Patent Document 1, there is provided a toy including an information holding medium and an information processing system capable of diversifying operations.

An object of the present invention is to provide a toy having higher interest than ever before.

### SUMMARY OF INVENTION

The toy of the present invention includes, for example, a first unit that holds identification information, wherein the first unit is provided with a plurality of protrusions constituting the identification information and a movable protrusion that does not constitute the identification information, and an operation portion of a second unit is operated by detecting, by the second unit detachably attachable to the first unit, the plurality of protrusions constituting the identification information or the movable protrusion.

### ADVANTAGEOUS EFFECTS OF INVENTION

According to the present invention, it is possible to provide a toy with high interest.

### BRIEF DESCRIBED OF DRAWINGS

FIG. 1 is a perspective view illustrating one embodiment of a toy of the present invention.
FIG. 2 is a perspective view illustrating a back surface side of the second unit illustrated in FIG. 1.
FIG. 3 is a perspective view illustrating a state in which the second unit is attached to the first unit.
FIG. 4 is a longitudinal cross-sectional view of the second unit.
FIG. 5 is a perspective view illustrating a state in which the first unit illustrated in FIG. 1 is transformed into a first form.
FIG. 6 is a cross-sectional view of a main part of the first movable portion.
FIG. 7 is a cross-sectional view of a main part of a second movable portion.
FIG. 8 is an external perspective view illustrating the first shape of a weapon different from the form illustrated in FIG. 5.
FIG. 9 is a cross-sectional perspective view of a main part for describing an operation of the movable protrusion by an operation member.
FIG. 10 is an enlarged cross-sectional view of the main part for illustrating an operation of a specific detection element.
FIG. 11 is an enlarged perspective view of the bottom portion of the first unit illustrated in FIG. 1.
FIG. 12 is a perspective view illustrating an example of a state in which the second unit is combined with another first unit.

### DESCRIPTION OF EMBODIMENTS

Hereinafter, a toy according to one embodiment of the present invention will be described with reference to the drawings.

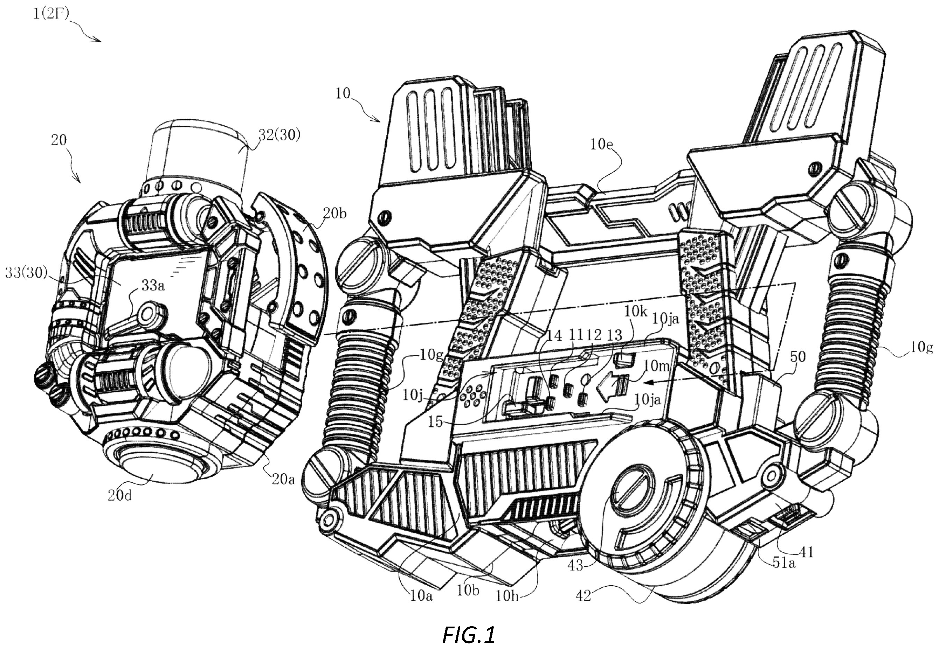

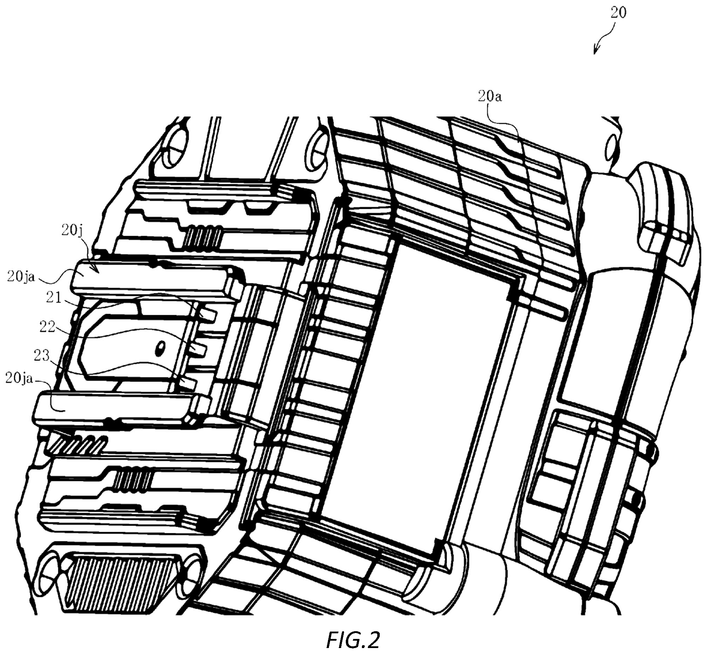

FIG. 1 is a perspective view illustrating one embodiment of the toy 1 of the present invention, and FIG. 2 is a perspective view illustrating a back surface side of a second unit 20 illustrated in FIG. 1.

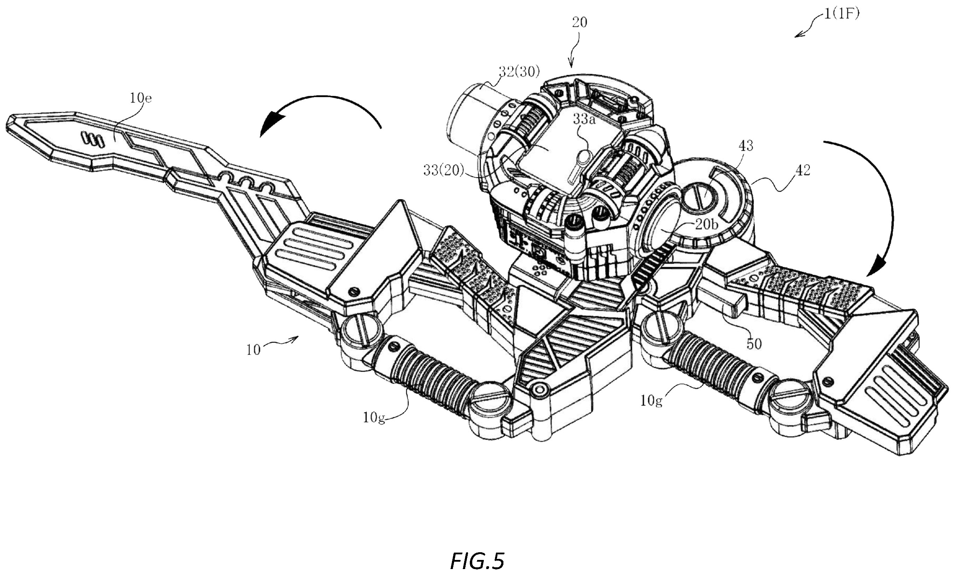

The toy 1 illustrated in FIGS. 1 and 2 is the item used when a hero transforms in dramas, animations, and the like, and is a so-called "role-play toy" used to become the hero. The toy 1 includes a configuration imitating, for example, the structure related to a vehicle, and uses two items, a first unit 10 and a second unit 20. The first unit 10 includes a configuration whose appearance is transformable as described later, and, as one form thereof, has, for example, a shape imitating the steering wheel of a racing car including grips 10g at both left and right end portions that can be gripped by hands (a second form 2F different from a first form 1F illustrated in FIG. 5).

The second unit 20 has the main body portion 20a having a mechanical cube shape. A side surface of the main body portion 20a is provided with the pedal portion 20b imitating an accelerator, a front surface thereof is provided with a meter portion 33 imitating a car meter, and an upper surface thereof is provided with a light emitting portion 32 imitating a warning light (rotating light) attached to an upper portion of a vehicle body. The meter portion 33 and the light emitting portion 32 are configured as an operation portion 30 capable of producing the light emission effect by an interior LED or the like. The second unit 20 is provided, on a back surface thereof, with the item coupling portion 20j as illustrated in FIG. 2. On the other hand, the main body portion 10a of the first unit 10 is provided, at a center on a front surface side thereof, with a coupling portion 10j, and the item coupling portion 20j is attached to and detached from the coupling portion 10j.

In the toy 1, although details thereof will be described later, the coupling portion 10j provided in the first unit 10 is provided with, in an appropriate arrangement, the identification first protrusion 11, the identification second protrusion 12, the identification third protrusion 13, and the identification fourth protrusion 14, which are a plurality of protrusions constituting identification information. In addition, the movable protrusion 15 that does not constitute identification information is provided, unlike the protrusions 11, 12, 13, and 14. As will be described later, when the first unit 10 is transformed into a specific shape, the movable protrusion 15 can be moved in the left-right direction in the drawing by the operation member 50. In addition, the second unit 20 is provided with the first detection element 21, the second detection element 22, and the third detection element 23 that detect the identification information of the first unit 10. Here, in the present embodiment, as illustrated in FIG. 2, the first detection element 21, the second detection element 22, and the third detection element 23 are provided so as to be vertically aligned in the drawing. When the second unit 20 is attached to the first unit 10, the first detection element 21, the second detection element 22, and the third detection element 23 detect the identification first protrusion 11, the identification second protrusion 12, the identification third protrusion 13, and the identification fourth protrusion 14. By this detection, it is detected that the unit is the first unit 10 (identified by a number of protrusions, arrangement, and the like).

As an operation when fitting the item coupling portion 20j on the back surface side of the second unit 20 into the coupling portion 10j with respect to the first unit 10, the pair of upper and lower insertion rails 20ja of the second unit 20 are set to correspond to the inside of the pair of upper and lower fitting rails 10ja of the first unit 10, and are slid in the direction of the arrow mark 10m. When attachment of the second unit 20 is completed, the locking claw 10k that has been pushed into and retracted within the main body portion 10a by the slide operation of the second unit 20 protrudes from the outer surface of the main body. As a result, the locking claw 10k engages with the end portion of the insertion rail 20ja, and the second unit 20 is locked so as not to come off.

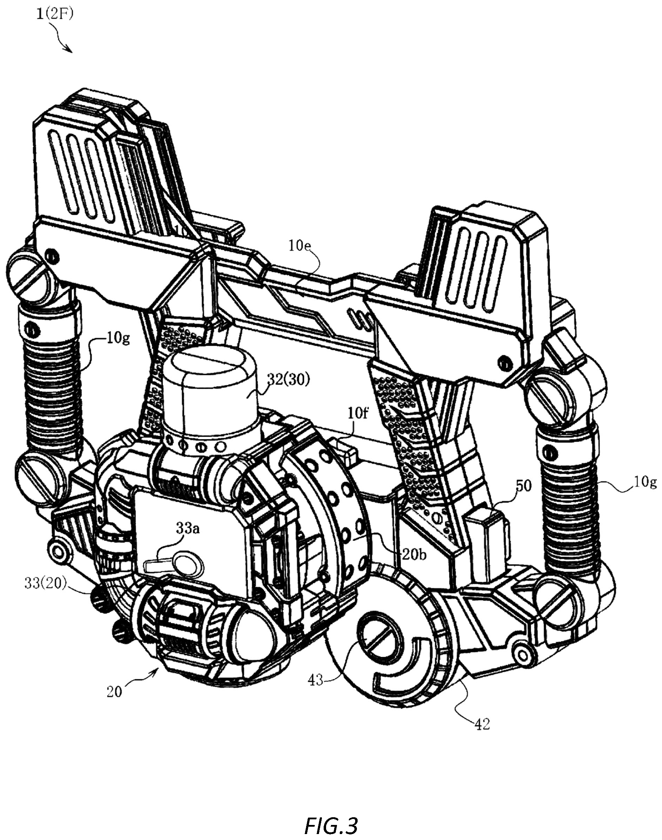

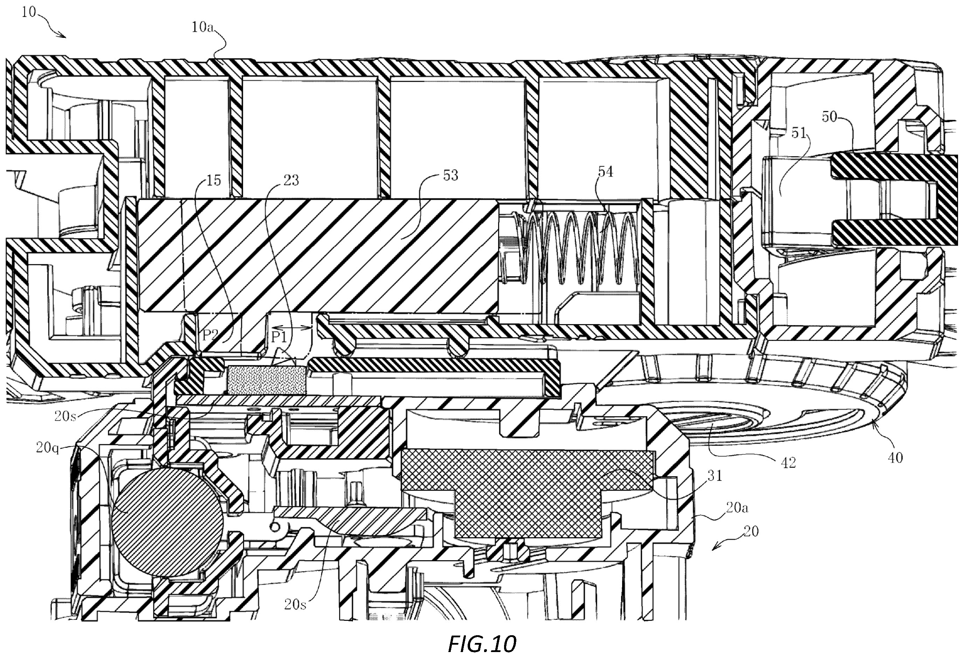

FIG. 3 is a perspective view of a state in which the second unit 20 is attached to the first unit 10. As illustrated in FIG. 3, when the second unit 20 is attached to the first unit 10, as described above, the plurality of detection elements 21, 22, and 23 identify what type of toy the first unit 10 is. By this identification, for example, the first operation such as the attachment sound of the second unit 20 is output. For example, as necessary, for an effect corresponding to the type of the first unit 10, a predetermined effect is performed by the sound producing portion 31 (see FIG. 10) such as a speaker, which is the operation portion 30, and the light emitting portion 32. On the other hand, in an attached state of the second unit 20, the lowermost third detection element 23 is disposed at the operable position by the movable protrusion 15. Then, the third detection element 23 is operated by the movable protrusion 15 as described later. When the second unit 20 is to be removed, the second unit 20 can be brought into a removable state by pressing the lock release button 10f.

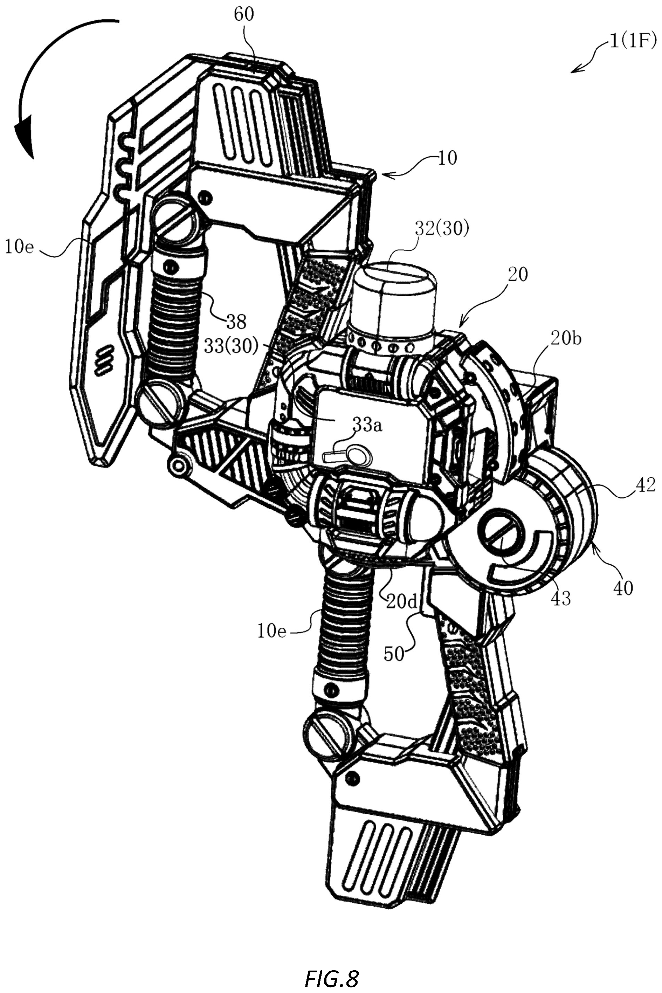

The second unit 20 includes, inside the main body portion 20a thereof, the sound producing portion 31 (see FIG. 10) such as the speaker of the operation portion 30 in the toy 1, the light emitting portion 32 imitating the warning light (the meter portion 33 functions as the light emitting portion), and the like. That is, the second unit 20 includes the power supply unit 20q (see FIG. 10), and performs a predetermined effect by operating the operation portion 30 by a control unit controlling effect items stored in advance. As an example of an effect, as illustrated in FIG. 3, when the second unit 20 is attached/inserted into the first unit 10, the attachment sound is activated. In a state in which the first unit 10 is transformed (see FIGS. 5 and 8), the predetermined effect can be performed by operating the movable protrusion 15.

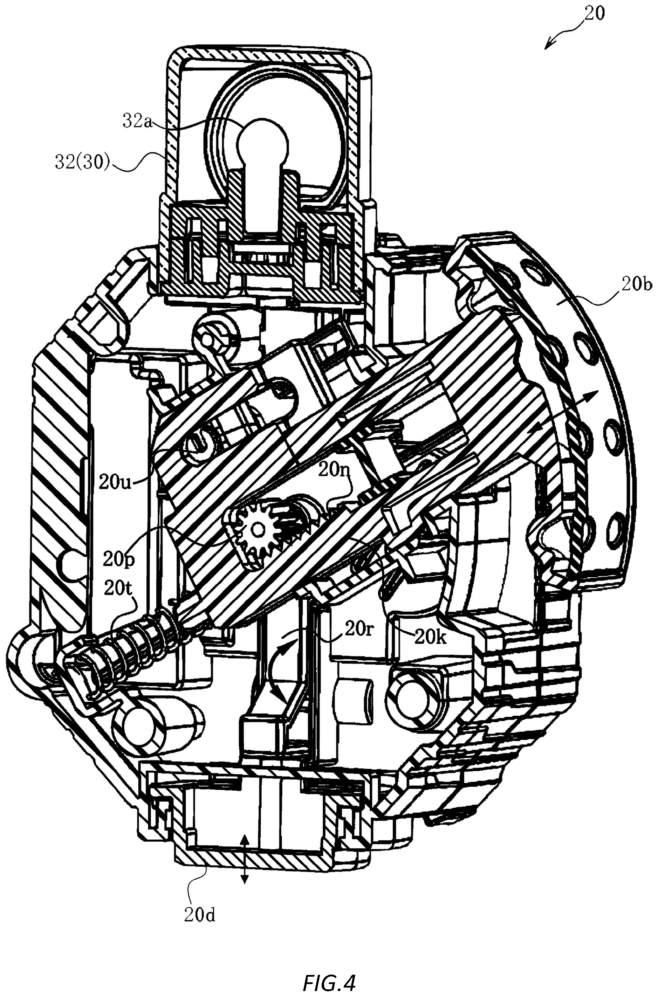

FIG. 4 is a longitudinal cross-sectional view of the second unit 20. The second unit 20 includes, for example, as described above, the power supply unit 20q, the control board 20s (see FIG. 10) holding a control unit and the like, and the operation portion 30 (the sound producing portion 31 and the light emitting portion 32), so that various effects can be performed by itself as a transformation item. The pedal portion 20b includes a pedal shaft portion 20k extending toward the center of the main body portion 20a, and the pressing spring 20t is provided on a lower end side of the pedal shaft portion 20k and is biased in a pressing manner in an axial direction. The control board 20s is provided on the back surface side of the pedal shaft portion 20k in FIG. 4 (see FIG. 10). In addition, a plurality of rubber switches (not shown) are provided on the control board 20s, and the rubber switches are operated by the pressing part 20u that moves back and forth by a pushing operation of the pedal portion 20b on a side surface and the swing part 20r that swings back and forth by a press button 20d on a bottom surface, whereby a predetermined effect is performed.

In addition, the pedal shaft portion 20k has a space formed inside, and a rack gear 20n along an axial direction is provided on an inner wall surface thereof. The pinion gear 20p pivotally supported by the main body portion 20a meshes with the rack gear 20n. Therefore, by operating the pedal portion 20b so as to push it in, the pinion gear 20p rotates. The axis center of the pinion gear 20p supports the meter needle 33a of the meter portion 33, and the meter needle 33a rotationally operates by rotation of the pinion gear 20p.

The press button 20d is in contact with the swing part 20r disposed on the upper end side thereof, and an upper end of the swing part 20r is disposed so as to be capable of contacting the rubber switch. Then, by pushing the press button 20d in, the rubber switch is pressed, whereby the predetermined effect can be performed.

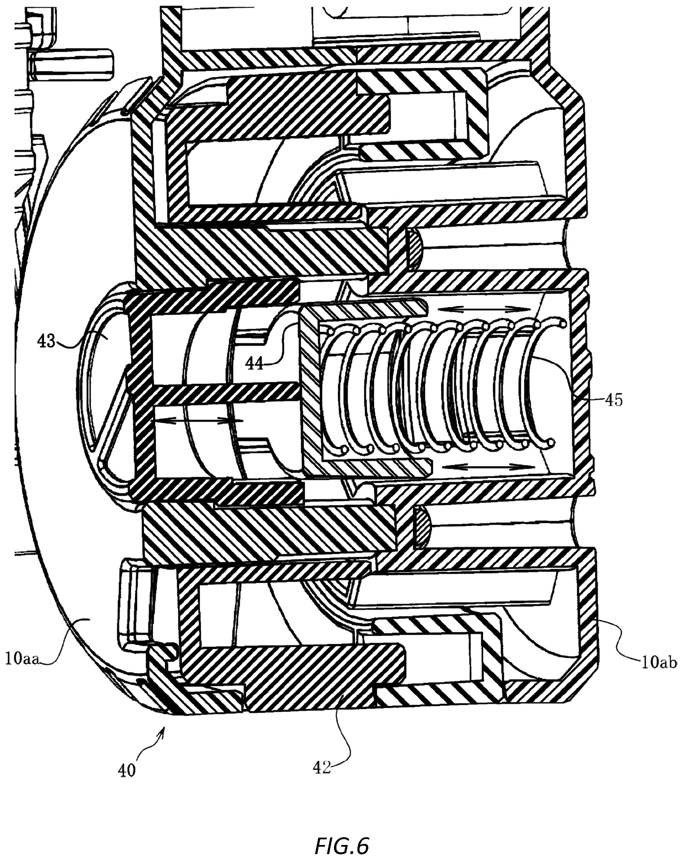

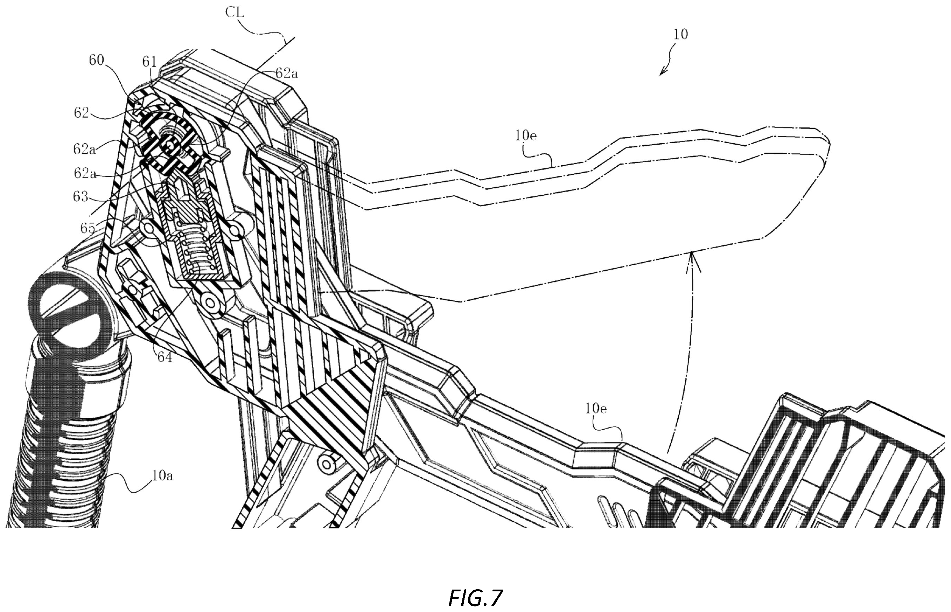

FIG. 5 is a perspective view illustrating a state in which the first unit 10 illustrated in FIG. 1 is transformed into the first form. FIG. 6 is a cross-sectional view of a main part of the first movable portion 40. The first unit 10 is configured to be transformable into the plurality of forms as described above. For example, the first form 1F illustrated in FIG. 5 is one state imitating a weapon used by a hero. To obtain the first form 1F, the first movable portion 40 including the right grip 10g and the rotating portion 42 integrated with the grip 10g is rotated approximately 180 degrees clockwise in the drawing. Further, the coupling arm member 10e that has been extended between the grips 10g is rotated approximately 90 degrees counterclockwise about the rotation center CL of the second movable portion 60 (see FIG. 7) provided on the upper side of the left grip 10g. In this manner, the weapon in the first form 1F as illustrated in FIG. 5 is completed.

The first movable portion 40 illustrated in FIG. 6 includes the rotating portion 42 rotatably held between a front case 10aa and a rear case 10ab of the main body portion 10a, a lock part 44 is disposed inside the rotating portion 42 on an inner side of a rotation operation button 43, and the lock part 44 is biased by a lock-part biasing spring 45 in a direction of the rotation operation button 43. In this configuration, the lock is released in a state in which the rotation operation button 43 is pressed, and the rotating portion 42 can be rotated in the lock-released state. That is, the rotation operation button 43 is pressed at the beginning of starting rotation, and at a stage at which the rotation operation is completed, the lock part 44 returns to a locked state and the rotation position at the rotation completion stage is maintained.

FIG. 7 is a cross-sectional view of the main part of the second movable portion 60. FIG. 8 is an external perspective view illustrating the weapon having a shape different from the form illustrated in FIG. 5. In the second movable portion 60, as illustrated in FIG. 7, the coupling arm member 10e is provided, at a base end portion thereof, with the central shaft 61 serving as a rotation center. The central shaft 61 is provided, around an axis, with the click member 62 integrated with the central shaft 61. The click member 62 is provided, on the outer peripheral surface thereof, with three recessed portions 62a. Further, the click pin 63 fitted into the recessed portion 62a is pressed and biased toward the click member 62 by the pin pressing spring 64. With this configuration, when the coupling arm member 10e is rotated in a counterclockwise direction in the drawing, the click member 62 rotates and the click pin 63 fits into the adjacent recessed portion 62a on the left side. As a result, the coupling arm member 10e is locked at the position illustrated in FIG. 5, and the coupling arm member 10e is in a state of protruding toward the tip end side of the weapon.

The toy 1 can also take the form as illustrated in FIG. 8. In this form, the form is such that, from the form illustrated in FIG. 5, the coupling arm member 10e is further rotated by 180 degrees. That is, the coupling arm member 10e is further rotated from the state illustrated in FIG. 7 to the recessed portion 62a at the position rotated by 270 degrees, and is locked. This coupling arm member 10e clicks and is locked at the predetermined position merely by being rotated, and therefore can be easily positioned and locked without performing any other operation in particular.

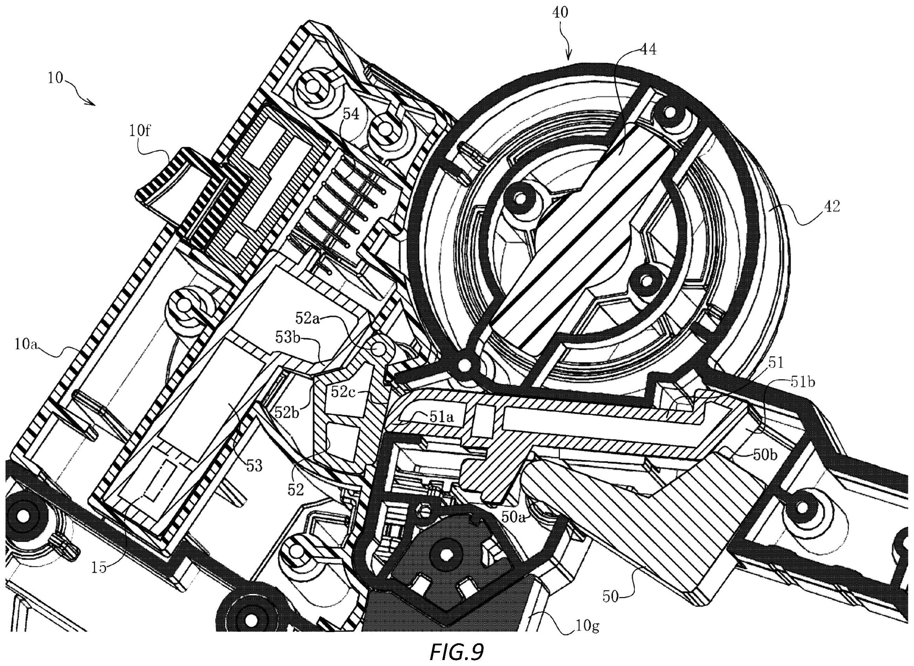

FIG. 9 is a cross-sectional perspective view for explaining an operation of the movable protrusion 15 by the operation member 50. As illustrated in FIG. 9, in a state in which the portion of the rotating portion 42 is rotated, the movable protrusion 15 is operable by the operation member 50. The operation member 50 is, for example, the substantially L-shaped member, and is provided on one end side thereof (the left end in the drawing) so as to be rotatable about the rotation fulcrum 50a, for example, like a gun trigger. The operation member 50 has the corner portion 50b on another end side in contact with the contact surface 51b of the first connection member 51. The first connection member 51 is disposed so as to extend in the tangential direction of the rotating portion 42 and to be slidable in the same direction. Further, the first connection member 51 has the tip portion 51a on a side opposite to the contact surface 51b in contact with a side surface portion 52c of the second connection member 52. The second connection member 52 is supported so as to be rotatable about the rotation shaft portion 52a. The tip portion 51a of the first connection member 51 can push the second connection member 52 in a counterclockwise direction. Further, in the second connection member 52, the protruding corner portion 52b on the opposite side from the side surface portion 52c is in contact with the tapered surface 53b of the third connection member 53. The third connection member 53 is provided so as to be slidable in a direction intersecting the first connection member 51. Further, the third connection member 53 is biased by the pressing spring 54 arranged along the sliding direction in a direction toward the lower left in the drawing. Accordingly, the operation member 50 can slide the third connection member 53 against the biasing force of the operation member 50.

FIG. 10 is an enlarged cross-sectional view of the main part for showing an operation of a specific detection element (third detection element 23). The third connection member 53 has the movable protrusion 15 projecting from a side surface facing the second unit 20 side. A state in which the second unit 20 is attached is a second state in which the third detection element 23 functioning as the specific detection element does not detect the movable protrusion 15 (a state in which the movable protrusion 15 is at a position P2 outside an opposing region with respect to the third detection element 23). However, by operating so as to push in the operation member 50, the third detection element 23 is brought into a first state in which its switch tip is pushed by the movable protrusion 15 from left to right in the drawing and detects the movable protrusion 15 (a state in which the movable protrusion 15 is at a position P1 within an opposing region with respect to the third detection element 23). As a result, the operation portion 30 can output a second operation different from the above-described first operation, for example, the attack effect using the weapon.

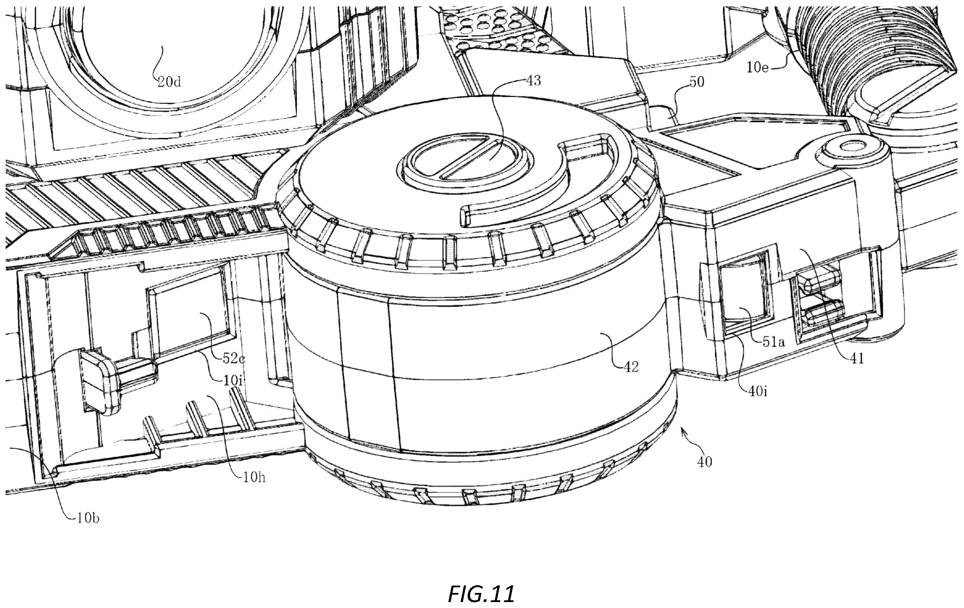

FIG. 11 is an enlarged perspective view of the bottom portion 10b of the first unit 10 illustrated in FIG. 1. Here, in the above-described first form 1F (weapon form), the second operation is possible by operation of the operation member 50; however, when different from the first form 1F, the operation member 50 is separated from the second unit 20. For example, when the rotating portion 42 of the first movable portion 40 is in the state illustrated in FIG. 3, as illustrated in FIG. 11, the bottom portion 10b is in a state in which the side surface portion 52c of the second connection member 52 located at the bottom opening 10i of the coupling recess 10h and the tip portion 51a of the first connection member 51 located at the movable portion side opening 41i are separated from each other. That is, the state is not a state as illustrated in FIG. 9 in which the lower-end protruding portion 41 is fitted into the coupling recess 10h. In such a state, even if, for example, the operation member 50 is pressed, the operation member 50 merely retracts so as to be embedded in the movable portion, and cannot be operated.

As an example of a way of playing with the toy 1 configured as described above, for example, after activating the second unit 20 as a transformation item, by pressing the pedal portion 20b, for example, an engine sound effect is produced. At this time, by pressing the pedal portion 20b, for example, a plurality of times, the engine sound is produced such that the engine speed increases, and thereafter, by pressing a press button 20d, a transformation effect is performed together with an effect of the operation portion 30.

Further, after transformation, as illustrated in FIG. 3, when the second unit 20 is attached when the first unit 10 is in the steering wheel form, by operation of the press button 20d, for example, drive play can be performed. Further, in this state, when the pedal portion 20b is pressed, play in which the hero delivers a special move in which the hero transforms into the robot is possible.

Further, after transformation, when the second unit 20 is attached in a weapon form as illustrated in FIGS. 5 and 8, a specific sound effect is performed when the operation member 50 is long-pressed as a weapon, and thereafter, when the operation member 50 is released, the attack sound by the weapon is activated. Further, play in which another special move is executed by an operation of pressing the pedal portion 20b a plurality of times is possible.

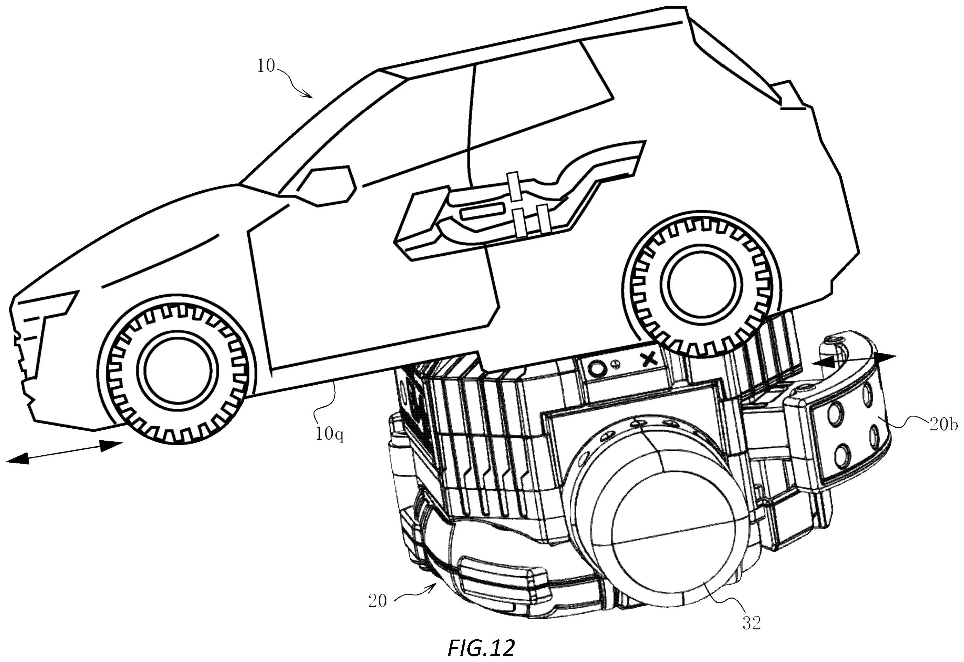

FIG. 12 is a perspective view illustrating an example of a state in which the second unit 20 is combined with another first unit 10. The first unit 10 illustrated in FIG. 12 has a shape simulating an entire vehicle body, and, for example, the coupling portion 10j illustrated in FIG. 1 is provided on a bottom surface 10q of the vehicle body, and is configured to be detachably attachable to the item coupling portion 20j of the second unit 20. When the first unit 10 of this vehicle body type is detected, the second unit 20 performs a corresponding effect. Further, also in the first unit 10 in this case, it is possible to operate the third detection element 23 by appropriately providing the operation member 50 as necessary.

As described above, in the toy 1 of the present embodiment, the second unit 20 attachable to the first unit 10 having protrusions 11, 12, 13, and 14 for identification information and a movable protrusion 15 not constituting identification information is configured to be capable of detecting these protrusions 11 to 15, thereby enabling effect output that operates by associating the first unit 10 and the second unit 20.

Further, in the toy 1 of the present embodiment, in an attached state of the second unit 20, the operation for operating the movable protrusion 15 is enabled, and another effect (second operation) based on an operation of the movable protrusion 15 different from the first operation based on detection of the protrusions 11, 12, 13, and 14 for identification information is possible.

Further, according to the toy 1 of the present embodiment, by the first unit 10 having the operation member 50 interlocked with the movable protrusion 15, it is possible to output a second operation different from the first operation by the operation member 50. Further, the operation member 50 is configured to be operable in the first form 1F while being configured to be inoperable in the second form 2F other than the first form, thereby enabling association of a specific effect corresponding to the first form 1F.

In the toy 1 according to the present embodiment, the operation member 50 is in a state of being unable to be operated because the operation member 50 is embedded in the rotating portion in the second form 2F other than the first form (e.g., the steering wheel form), and thus the form of the toy 1 and activation of an effect are not mistaken. In addition, since the operation member 50 has the mechanical structure that is exposed (operable state) from the first movable portion 40 in the first form 1F, a configuration can be achieved in association with transformation of the shape of the first unit 10.

Although the one embodiment of the present invention has been described above, the present invention can be appropriately modified within the scope of its technical idea. For example, in the above embodiment, a combination structure of the first unit 10 and the second unit 20 is employed; however, the present invention is not limited to this configuration, and a configuration in which another unit is combined with the second unit 20 may be employed.

In addition, in the above embodiment, a configuration using three detection elements is employed and one of the three detection elements is used as a specific detection element; however, the present invention is not limited to this configuration, and a configuration in which the detection element that functions only as a specific detection element is provided may be employed. In addition, a number of detection elements is not limited in any way to the number in the above embodiment. In addition, the movable protrusion 15 need not be the single movable protrusion 15, and a plurality of movable protrusions 15 may be provided.

### Summary of Embodiments

The above embodiments disclose at least the following toys.
(1) A toy comprising a first unit that holds identification information, wherein
   the first unit is provided with a plurality of protrusions constituting the identification information and a movable protrusion that does not constitute the identification information, and
   an operation portion of a second unit is operated by detecting, by the second unit detachably attachable to the first unit, the plurality of protrusions constituting the identification information or the movable protrusion.
(2) The toy according to (1), wherein
   the second unit has a plurality of detection elements that detect the identification information and the operation portion capable of outputting a first operation corresponding to the identification information,
   one detection element of the plurality of detection elements is a specific detection element, and
   the movable protrusion of the first unit is movable between a position within a region facing the specific detection element and a position outside the region in a state where the second unit is attached to the first unit.
(3) The toy according to (2), wherein the operation portion outputs a second operation different from the first operation based on a change in a contact state between the movable protrusion and the specific detection element.
(4) The toy according to any one of (1) to (3), wherein the first unit has an operation member interlocked with the movable protrusion.
(5) The toy according to (3), wherein
   a state in which the specific detection element detects the movable protrusion is a first state,
   a state in which the specific detection element does not detect the movable protrusion is a second state, and
   the operation portion outputs the second operation that varies when transitioning from one of the first state or the second state to another of the first state or the second state and when transitioning from another of the first state or the second state to one of the first state or the second state.
(6) The toy according to (4) or (5), wherein
   the first unit is configured to be transformable into a plurality of forms, and
   the operation member is configured to be operable in a first form of the plurality of forms and to be inoperable in a form other than the first form.
(7) The toy according to (6), wherein
   the first unit includes a movable portion for setting the first form, and
   the operation member is embedded in the movable portion in a form other than the first form and is exposed from the movable portion in the first form.
(8) The toy according to any one of (1) to (7), wherein the operation portion of the second unit performs at least an effect output using light or sound.

### REFERENCE SIGNS LIST

1 Toy;
1F First form;
2F Second form;
10 First unit;
11 Identification first protrusion (protrusion);
12 Identification second protrusion (protrusion);
13 Identification third protrusion (protrusion);
14 Identification fourth protrusion (protrusion);
15 Movable protrusion;
20 Second unit;
21 First detection element;
22 Second detection element;
23 Third detection element (specific detection element);
30 Operation portion;
31 Sound producing portion (operation portion);
32 Light emitting portion (operation portion);
40 First movable portion (movable portion);
50 Operation member.

## Claims

1. A toy comprising a first unit that holds identification information, wherein
the first unit is provided with a plurality of protrusions constituting the identification information and a movable protrusion that does not constitute the identification information, and
an operation portion of a second unit is operated by detecting, by the second unit detachably attachable to the first unit, the plurality of protrusions constituting the identification information or the movable protrusion.

2. The toy according to claim 1, wherein
the second unit has a plurality of detection elements that detect the identification information and the operation portion capable of outputting a first operation corresponding to the identification information,
one detection element of the plurality of detection elements is a specific detection element, and
the movable protrusion of the first unit is movable between a position within a region facing the specific detection element and a position outside the region in a state where the second unit is attached to the first unit.

3. The toy according to claim 2, wherein
the operation portion outputs a second operation different from the first operation based on a change in a contact state between the movable protrusion and the specific detection element.

4. The toy according to claim 1, wherein
the first unit has an operation member interlocked with the movable protrusion.

5. The toy according to claim 3, wherein
a state in which the specific detection element detects the movable protrusion is a first state,
a state in which the specific detection element does not detect the movable protrusion is a second state, and
the operation portion outputs the second operation that varies when transitioning from one of the first state or the second state to another of the first state or the second state and when transitioning from another of the first state or the second state to one of the first state or the second state.

6. The toy according to claim 4, wherein
the first unit is configured to be transformable into a plurality of forms, and
the operation member is configured to be operable in a first form of the plurality of forms and to be inoperable in a form other than the first form.

7. The toy according to claim 6, wherein
the first unit includes a movable portion for setting the first form, and
the operation member is embedded in the movable portion in a form other than the first form and is exposed from the movable portion in the first form.

8. The toy according to claim 1, wherein
the operation portion of the second unit performs at least an effect output using light or sound.
